Europäisches Patentamt

European Patent Office

Office européen des brevets

(11) Publication number: **0 258 506**
**A1**

## (12) EUROPEAN PATENT APPLICATION

(21) Application number: 86306811.0

(22) Date of filing: 03.09.86

(51) Int. Cl.4: **C08L 77/00 , C08L 29/04 , C08L 23/08**

(43) Date of publication of application:
09.03.88 Bulletin 88/10

(84) Designated Contracting States:
DE

(71) Applicant: Ube Industries, Ltd.
12-32, Nishihonmachi 1-chome
Ube-shi, Yamaguchi-ken 755(JP)

(72) Inventor: Uejo, Hirozo c/o UBE CHEMICAL
FACTORY
UBE INDUSTRIES LTD. 1978-10, Oaza Kogushi
Ube-shi, Yamaguchi-ken(JP)
Inventor: Sano, Kazunobu c/o UBE CHEMICAL
FACTORY
UBE INDUSTRIES LTD. 1978-10, Oaza Kogushi
Ube-shi, Yamaguchi-ken(JP)
Inventor: Shimizu, Kenji c/o UBE CHEMICAL
FACTORY
UBE INDUSTRIES LTD. 1978-10, Oaza Kogushi
Ube-shi, Yamaguchi-ken(JP)

(74) Representative: Burnside, Michael et al
Urquhart-Dykes & Lord 91 Wimpole Street
London W1M 8AH(GB)

(54) Resin composition of saponified ethylenic copolymer.

(57) A resin composition of a saponified product of an ethylenic copolymer comprising as polymer components 100 parts by weight of a saponified product of a copolymer of ethylene and vinyl acetate containing 5 to 50 % by weight of recurring units $-CH_2CH_2$-based on said ethylene monomer and having a saponification degree of about 80 % or more, and 5 to 150 parts by weight of a polyamide elastomer obtained by polycondensation of a caproamide, a polyether diamine and a dicarboxylic acid containing 30 to 90 % by weight of recurring units $-NH-(CH_2)_5-CO$-based on the caproamide monomer.

The resin composition of this invention is excellent in both of the gas barrier characteristic and the pinhole-formation resistance, and is particularly suitable for molding films or vessels for packaging foods.

EP 0 258 506 A1

## Resin composition of saponified ethylenic copolymer

## BACKGROUND OF THE INVENTION

This invention relates to a resin composition comprising a saponified product of an ethylene-vinyl acetate copolymer which has been saponified to a high degree formulated with a specific polyamide elastomer at a specific proportion. The film or vessel molded by extrusion molding from the resin composition of this invention is excellent in both of gas barrier characteristic and pinhole-formation resistance, and is particularly suitable for use in films or vessels for packaging foods.

Generally speaking, saponified products of ethylene-vinyl acetate copolymer (hereinafter sometimes abbreviated as EVOH) have been used as materials for forming films or vessels for packaging foods for which oxygen gas permeability rate is required to be small, since the molding products (films, vessels, etc.) of the saponified products (EVOH) have very good gas barrier property.

However, the saponified product of ethylene-vinyl acetate copolymer has the drawbacks that they are hard and brittle, for example, when used for films or sheets for packaging foods, the film may be easily broken or pinholes are liable to be formed by the contact with other substances during packaging working, or moving working or transportation working of packaged products which are packaged by the film, whereby sealing property which is a basic packaging property is often lost itself and the excellent gas barrier property of the saponified product (EVOH) cannot fully be utilized.

In order to resolve the above mentioned drawbacks of EVOH, various methods have been proposed in which a film of other resin having excellent mechanical strength is laminated on the surface of a film of EVOH. However, such laminating methods are very complex, therefore it is difficult to prepare products having stable quality or a film obtained by such methods can not necessarily be sufficiently satisfactory in mechanical strength, such as pinhole-formation resistance, etc.

In films or vessels for packaging foods having high gas barrier property, prevention of pinhole, etc. is an extremely important problem for reasons of safety and sanitation in foods. Therefore, it has strongly been expected to develop a new technology which would drastically improve the mechanical strength, such as pinhole-formation resistance, of films or vessels of EVOH.

As a means for improving such drawbacks of EVOH, there have been known the method in which resin compositions of EVOH mixed with various kinds of polyamides are used, as disclosed in Japanese Patent Publications (Kokoku) Nos. 24277/1969 and 22833/1973, Japanese Provisional Patent Publications (Kokai) Nos. I2I347/1975, 78749/1979, 78750/1979 and 34956/1980, etc.

According to the method as mentioned above, due to good compatibility between EVOH and polyamide, the polyamide can act so as to improve mechanical strength such as pinhole-formation resistance by mixing polyamide with EVOH, and yet excellent gas barrier property inherent in EVOH are not considerably impaired thereby. Particularly, an optical reflex index of EVOH is close to that of a nylon 6. Therefore, when a nylon 6 is incorporated in and mixed with EVOH, molded products (films, vessels, etc.) obtained from such resin composition have any advantages that its transparency is hardly reduced, etc.

However, the resin composition which is a mixture of EVOH and polyamide involves a great problem. That is, when EVOH and polyamide are mixed under molten state, both will undergo chemical reaction to increase the melt viscosity and finally become gelled, whereby molding becomes no longer possible.

Since such gelation becomes more marked as the molding temperature is higher, it has been proposed to use various kinds of copolymeric polyamides with lower melting temperature as the polyamide for the purpose of lower temperature molding, and such methods include those as disclosed in Japanese Provisional Patent Publications (Kokai) Nos. 78749/1979, 78750/1979 and 34956/1980.

However, even according to these methods, it is difficult to prevent completely gelation. Particularly, these methods can not be applied to films, sheets, etc.

Moreover, there have been proposed to use polyether amide block copolymer (polyamide polyether block copolymer) as the polyamide as disclosed in Japanese Provisional Patent Publications (Kokai) Nos. I39733/1985 (corresponds to European Provisional Patent Publication No. 0 I44 239) and I6I453/1985. However, molded products obtained by such method are inferior in heat resistance due to the presence of ester bonding in the polyether amide block copolymer and it is inferior in transparency, and also gelation is liable to occur during molding.

Further, it has also been proposed to incorporate a fairly large amount of a plastisizer capable of forming intermolecular hydrogen bonding in EVOH to improve pinhole-formation resistance of molded products of EVOH without impairment of the gas barrier property, as disclosed in, for example, Japanese Provisional Patent Publication (Kokoku) No. 20345/1984, etc.

However, the above-mentioned resin composition has disadvantage that the plastisizer bleeds out on a surface of the molded product on or after molding.

As mentioned above, a practical method to improve mechanical strength such as pinhole-formation resistance of molded product of EVOH without losing gas barrier property and molding workability have not yet substantially been established in industries.

## SUMMARY OF THE INVENTION

The present inventors have studied intensively in order to improve such mechanical strength such as pinhole-formation resistance of EVOH and consequently found that a resin composition comprising a specific EVOH mixed with a specific polyamide elastomer will be hardly gelled during molding thereof and can give a molded product which is improved in mechanical strength such as pinhole resistance without impairment of gas barrier property, to accomplish this invention.

More specifically, this invention concerns a resin composition of a saponified product of an ethylenic copolymer comprising as polymer components 100 parts by weight of a saponified product of a copolymer of ethylene and vinyl acetate containing 5 to 50 % by weight of recurring units -CH$_2$CH$_2$-based on said ethylene monomer and having a saponification degree of about 80 % or more, and 5 to 150 parts by weight of a polyamide elastomer obtained by polycondensation of a caproamide, a polyether diamine and a dicarboxylic acids containing 30 to 90 % by weight of recurring units -NH(CH$_2$)$_5$-CO-based on the caproamide monomer.

The resin composition of this invention has the following advantages:

(a) the resin composition has not been incorporated with a specific plastisizer having lower molecular weight in a large amount, the plasticizer does not substantially bleed out from the molding product on or after molding

(b) during molding of films, vessels, etc., there will occur no gellation or other trouble which will make molding difficult and also the resin composition can be molded at a considerably higher temperature; and besides,

(c) its molded product has satisfactory gas barrier property, and also has sufficiently improved mechanical strength such as pinhole-formation resistance, and therefore it can be suitably used as packaging materials.

## DETAILED DESCRIPTION OF THE INVENTION

The saponified product of a copolymer of ethylene and vinyl acetate to be used in this invention (EVOH) is a "saponified product of ethylene-vinyl acetate copolymer" having recurring units based on ethylene monomer (-CH$_2$CH$_2$-) (hereinafter referred to as a recurring unit I) at a proportion of 5 to 50 % by weight, preferably 10 to 45 % by weight, particularly preferably 15 to 40 % by weight based on the total amount of the polymer, and also having a saponification degree of about 80% or higher, preferably 90% or higher, particularly preferably 95% or higher.

The saponified product (EVOH) is prepared by saponification of an ethylene-vinyl acetate copolymer obtained by polymerization of ethylene monomer with vinyl acetate monomer according to the known method. If the above recurring units I based on ethylene monomer is less than 5 % by weight of the saponified product, such a saponified product is not suitable because the resin composition obtained by use thereof will be worsened in extrusion moldability. On the other hand, if the above recurring units I based on ethylene monomer is contained at a proportion of more than 50 % by weight, such a saponified product is not suitable because the product molded from the resin composition formulated with such a saponified product will be worsened in gas barrier property.

In this invention, there is no particular limitation with respect to polymerization degree, etc., of EVOH, but it is preferable for molding property to use EVOH having an M.F.I. (melt flow index; measured at a temperature of 210 °C under a load of 2,160 g) of about 1 to 20 g/10 min.

3

The polyamide elastomer used in this invention is a kind of polyamide which is prepared by (co)-polycondensation of a caproamide, a polyether diamine and a dicarboxylic acid and contains 30 to 90 % by weight, preferably 40 to 80 % by weight of recurring units [-NH(CH$_2$)$_5$-CO-] (hereinafter referred to as a recurring unit II) based on the caproamide monomer relative to the polyamide elastomer.

It is preferred that the above-mentioned polyamide elastomer has a relative viscosity of about 1.1 to 2.5 at 25 °C in a solution in which the polyamide elastomer is dissolved in methacresol in a concentration of 0.5 g/100 ml.

In the polyamide elastomer employed in this invention, if the proportion of the caproamide used for the polymerization to the entire monomer components employed in the polymerization (namely, proportion of the recurring units II contained to the polymer obtained) is less than 30 % by weight, the compatibility or miscibility of such polyamide elastomer with the saponified product (EVOH) would become poor, and consequently the transparency of films, vessels, etc. molded from such resin composition would be worsend. Therefore commercial values of them are lowered and it is inappropriate. On the other hand, if the proportion exceeds 90 % by weight, it is inappropriate because a gelation reaction between such polyamide elastomer and the EVOH tends to occur and it becomes hard to mold films, etc from such resin composition.

The above-mentioned caproamide includes caprolactam and 6-aminocapronic acid, a part of which may optionally be replaced by, for example, around 30 % by weight or less, relative to the caproamide, of a salt of haxamethylenediamine with adipic acid; 12-aminododecanoic acid; laurolactam; or the like.

As the polyether diamine, there may be employed a compound having plural recurring units III (-O-R-which is a straight-chain or branched oxyalkylene having three or more carbon atoms) in a molecular chain and having amino groups at both ends of the molecular chain, and there may be synthesized by, for example, introducing amino groups at both ends of an oligomer or a polymer which may be obtained by homopolymerization or copolymerization of, for example, propylene oxide or tetrahydrofurane. As specific examples of them, there may be mentioned polyoxypropylenediamine, bis(3-aminopropyl)-polytetrahydrofuran, etc.

In this invention, a part of the polyether diamine may be replaced by other diamine compounds.

As the other diamine compounds described above, there may be mentioned an aminated product of a dimer of an unsaturated aliphatic acid, a straight-chain or branched aliphatic diamine such as an alkylene diamine, an alicyclic diamine, an aromatic diamine, etc. Particularly, preferred is an aromatic diamine such as m-xylylenediamine and p-xylylenediamine, or an aminated product of a dimer of an unsaturated aliphatic acid such as oleic acid, linolic acid and linolenic acid (dimer diamine).

As specific example of the dicarboxylic acid, there may be mentioned oxalic acid, succinic acid, glutaric acid, adipic acid, pimelic acid, suberic acid, azelaic acid, dodecanedicarboxylic acid, 1,4-cyclohexanedicar-boxylic acid, terephthalic acid, isophthalic acid or an aliphatic dicarboxylic acid (dimer acid) obtained by subjecting a monobasic fatty acid having 8 to 24 carbon atoms (e.g., oleic acid, linoleic acid, linolenic acid, etc.) to coupling reaction (dimerization). In addition, there may be mentioned long-chain dicarboxylic acids.

In the present invention, the above-mentioned dimer acid is preferable. However, in order to obtain a polyamide elastomer (polyether amide) produced by the above-mentioned polycondensation reaction which has been colored as little as posible, it is particularly preferable to use a dimer acid having lower unsaturation degree for the polycondensation reaction.

The above-mentioned polycondensation may be carried out according to a conventional method. For example, there may preferably be mentioned the monomer method in which a predetermined amount of a caproamide, a polyether diamine and a dicarboxylic acid are introduced in a reaction vessel equipped with a stirrer and subjected to condensation at a temperature of 150 to 350 °C, preferably 200 to 300 °C, in a molten state. Further, there may preferably be mentioned the prepolymer method in which a caproamide and a dicarboxylic acid are polycondensated to synthesize a polyamide oligomer having carboxyl groups at its both ends, and then the polyamide oligomer is subjected to polycondensation with a polyether diamine alone or a mixture thereof with the other diamine compounds to produce a block copolymer.

The polyether diamine and the dicarboxylic acid may preferably be employed for the above-mentioned polycondensation reaction in such an amount that the number of amino groups in the polyether diamine may be approximately the same as that of carboxyl groups in the dicarboxylic acid. In other words, the amounts of the two components to be employed for the above-mentioned polycondensation may preferably be equivalent to each other.

The resin composition of this invention is a resin composition of a saponified product of ethylenic copolymer containing 100 parts by weight of the above-mentioned saponified product of a copolymer of ethylene and vinyl acetate (EVOH) and 5 to 150 parts by weight, preferably 10 to 100 parts by weight, of the polyamide elastomer as described above as polymeric components.

In the resin composition of this invention, if the proportion of the polyamide elastomer used relative to the saponified product (EVOH) is lower than 5 parts by weight, mechanical strength such as pinhole-formation resistance of the molded products such as films formed from such a resin composition will remain inferior as before without improvement, therefore it is inappropriate. On the other hand, if the proportion of the polyamide elastomer used relative to the saponified product (EVOH) is greater than 150 parts by weight, the gas barrier property of the molded product formed from such a resin composition will be undesirably insufficient.

The method for preparation of the resin composition of this invention is not particularly limited but it can be practiced according to "the method of mixing the saponified product and the polyamide elastomer as described above" which is a conventional known method.

More specifically, as the known method of mixing of the saponified product with the polyamide elastomer as described above, for example, the saponified product and the polyamide elastomer as described above may be blended uniformly under the state of pellets or powder, subsequently melting and kneading the blend through an extruder to be formed into pellets, which pellets are used for molding. Alternatively, pellets or powder of the saponified product and the polyamide elastomer as described above are blended uniformly and the resultant blend is directly fed into a forming machine for films, etc. and molding is effected while kneading the mixture within the molding machine.

The resin composition of this invention can be used for molding, mainly, packaging materials such as films, sheets, tubes, bottles (vessels), but it can be used for the other uses.

For forming the resin composition of this invention into molded articles such as films, vessels, conventional extrusion molding methods, blow molding methods, etc. may be applicable, and stable continuous molding is possible in such molding methods without generation of gelled product over long time.

For example, for preparing films, sheets, etc. from the resin composition of this invention, well known cast molding methods and tubler molding methods may be applicable.

In the above-mentioned cast molding methods, films or sheets can be prepared by extruding the resin composition of this invention in a molten state and in a film shape through a T-die head of the extruder in the molten state, and consequently cooling them on a casting drum to solidify. In the above-mentioned tublar molding methods, tubes (films) are molded by extruding the resin composition in a molten state and in a tubler shape through a ring shape die-head of the extruder, blowing air or the like into the resulting tublar shape body and further subjecting it to air cooling by air ring or water cooling by directly contacting with water to cool and solidify.

The films, sheets, etc., comprising the resin composition of this invention are excellent in gas barrier property and pinhole-formation resistance, while retaining transparency, hot water resistance and oil resistance, and therefore is of high utilization value. Further, much more excellent properties can be added to these films, sheets, etc. by laminating layers of other thermoplastic resins on them. For example, it becomes to be possible to considerably lower the vapor permeability and add the heat seal property by laminating layers of other thermoplastic resin compositions on the films or sheets according to laminating molding, etc.

The resin composition of this invention is also inclusive of those in which other components such as pigments, heat stabilizers, antioxidants, weathering resistant agents, crystallization promotors, lubricants, fillers, plasticizers, etc., are added in appropriate amounts or in a little amount.

This invention is described in more detail by referring to the following Examples and Comparative examples. The physical properties of the films in Examples or Comparative examples were measured according to the methods as described below.


(I) Oxygen permeability:

Measured using a film having a thickness of 50 μ by means of an oxygen gas permeability measuring device (OXYTRAN-Model 100, produced by Modern Control Co.) under the conditions of 20 °C and absolutely dry state.

(2) Pinhole-formation resistance:

Measured using a film having a thickness of 50 μ by tensile test according to ASTM D-882 at 23 °C under absolutely dry state.

The tensile modulus and the elongation were used as the measure of the pinhole-formation resistance. That is, in the above test, as the tensile modulus is lower or as the elongation is greater, the pinhole-formation resistance is evaluated to be better.

(3) Viscosity increase gelling characteristic:

Saponified product (EVOH) and polyamide elastomer were melted and kneaded through a single screw extruder to form pellets of the resin composition of this invention, which pellets were filled into a glass tube while under sealing with nitrogen gas. Then, the pellets were subjected to melting and heating treatment in an oil bath of 250 °C for a predetermined time (about 6 hours) and the melt viscosity of the pellets was measured by means of capillary rheometer under the conditions shown below:

measuring temperature; 250 °C,

measuring shearing rate; 100 sec$^{-1}$.

The viscosity increase gelling characteristic was evaluated by the value of the ratio ($\eta_6/\eta$) of the melt-viscosity $\eta_6$ of the viscosity $\eta_6$ after heat treatment for 6 hours to the melt viscosity $\eta$ of the oil bath-untreated material.

(4) Transparency of a film:

Haze measured using a film having a thickness of 50 μ by means of a Haze meter (HGM-2K, Direct reading type Haze computer, produced by Suga Shikenki Co.).

Further, the compositions of polyamide elastomer used in the following Examples and Comparative examples are shown in Table I.

The samples used in the Examples and Comparative examples are obtained by polycondensating the polyamide elastomers shown in Table I at 240 °C under a nitrogen atmosphere for four hours and extracting the resulting polymers in hot water for 24 hours.

Example I

A blend obtained by blending pellets of I00 parts by weight of a "saponified product of an ethylene-vinyl acetate copolymer (EVOH)" containing 38 mole % (24 % by weight) of recurring units I derived from ethylene monomers and having a saponification degree of 99%, an M.F.I. (2I0 °C, 2,I60 g) of 3.5 and a melting point of I73 °C and pellets of 42.9 parts by weight of a polyamide elastomer (hereinafter referred to shortly as "polyether amide A") containing 70 % by weight of recurring units II based on caproamide monomers, and having a relative viscosity of I.77 and a melting point of 205 °C was fed into an extruder (T-die extruder, screw diameter = 40 mm) and melt-extruded at 250 °C to extrude a film of a resin composition comprising the polymer components of the EVOH and the polyether amide A. Then, the extruded film was solidified by cooling on a casting drum with a surface temperature of 70 °C to mold a film with a thickness of about 50 μ. The gelling degree of the EVOH and the polyether amide A ($\eta_6/\eta$) and other physical properties of the films are shown in Table 2.

The resin composition employed in the film formation as mentioned above did not form any gelled product, because of its low gelling degree, even if the film was formed over a long period of time. Also, the film obtained by the film formation as described above was found to be good in the oxygen permeability, remarkably improved in the pinhole-formation resistance and also good in the gas barrier property.

Example 2

A film was formed in the same manner as in Example I except for using II.I parts by weight of the polyamide elastomer (polyether amide A).

The results are also shown in Table 2.

6

The film obtained as described above was found to be good in both of the gas barrier property and the pinhole-formation resistance and to have good transparency substantially without generation of gelled product during film formation because the gelling degree of the resin composition of the EVOH and the polyether amide A employed in the film formation was low.

Example 3

A film was formed in the same manner as in Example I except for using I00 parts by weight of the polyamide elastomer (polyether amide A).

The results are also shown in Table 2.

The film obtained as described above was found to be good in both of the gas barrier property and the pinhole-formation resistance and to have good transparency substantially without generation of gelled product during film formation because the gelling degree of the resin composition of the EVOH and the polyether amide A employed in the film formation was low.

Comparative example I

A film was formed in the same manner as in Example I except for using no polyamide elastomer (polyether amide A) at all. The results are shown in Table I.

The film obtained as described above was good in the gas barrier property, but inferior in the pinhole-formation resistance because it is rigid and small in the elongation.

Comparative example 2

A film was formed in the same manner as in Example I except for changing the amount of the polyamide elastomer employed to 3.I parts by weight. The film obtained as described above was hardly improved in the pinhole-formation resistance.

Comparative example 3

A film was formed in the same manner as in Example I except for changing the amount of the polyamide elastomer (polyether amide A) employed in Example I to 233.3 parts by weight.

The results are shown in Table 2.

It can be seen that the film obtained as described above was remarkably worsened in the gas barrier property.

Comparative example 4

A film was formed in the same manner as in Example I except for using a copolymer of nylon 6 and nylon 6,6 [having a weight ratio of constituent units of nylon 6 to nylon 6,6 (6/6,6) of 85/I5, a melting point of I95 °C and a relative viscosity (in a solution of 98 % sulfuric acid) of 3.40] in place of the polyamide elastomer used in Example I.

The results are shown in Table 2.

The resin composition made of the EVOH and the copolymer of nylon 6 and nylon 6,6 is high in the gelling degree and hence the formation of gelled products occured vigorously when the film formation was carried out over a long period of time. As the result, the film formation itself was difficult to be carried out.

Example 4

A film was formed in the same manner as in Example I except for using a polyamide elastomer (hereinafter referred to shortly as "polyether amide B") containing 40 % by weight of recurring units II based on a caproamide monomer and having a relative viscosity of I.7I and a melting point of I74 °C in place of the polyamide elastomer (polyether amide A) used in Example I.

The results are shown in Table 2.

The film obtained as described above was found to be good in the gas barrier property, the pinhole-formation resistance and also the transparency. Further, the gellation degree of the resin composition made of the EVOH and the polyether amide B employed in the film formation as described above was low. Therefore, the formation of gelled products during the film formation did not substantially occur.

Comparative example 5

A film was formed in the same manner as in Example I except for using the polyamide elastomer (hereinafter referred to shortly as "polyether amide C") containing 20 % by weight of recurring units II based on a caproamide monomer, and having a relative viscosity of I.68 and a melting point of I53 °C in place of the polyamide elastomer (polyether amide A) used in Example I.

The results are shown in Table 2.

The above-mentioned film formed from the resin composition incorporated with the polyether amide C was worsened in the transparency, because the polyether amide C mentioned above is inferior in compatibility to the saponified product (EVOH).

Comparative example 6

A film was formed in the same manner as in Example I except for using polyamide elastomer (hereinafter referred to shortly as "polyether amide D") containing 95 % by weight of recurring units II based on a caproamide monomer and having a relative viscosity of I.8I and a melting point of 208 °C in place of the polyamide elastomer (polyether amide A) used in Example I.

The results are shown in Table 2.

The resin composition made of the EVOH and the polyether amide D is high in the gelling degree, and hence the formation of gelled products occured vigorously when the film formation was carried out over a long period of time. As the results, the film formation itself was difficult to be carired out.

8

<div align="center">Table 1</div>

| Polyamide elastomer | Composition | % by weight |
|---|---|---|
| Polyether amide A | Caprolactam<br>Polyoxypropylenediamine<br>(Jeffermine D-2000; produced<br>by Jefferson Chemical Co.,)<br>Methaxylenediamine<br>Dimer acid<br>(Empole 1010; produced by<br>Emery Co.,) | 70<br>14<br><br><br>2<br>14 |
| Polyether amide B | Caprolactam<br>Polyoxypropylenediamine<br>(Jeffermine D-2000; produced<br>by Jefferson Chemical Co.,)<br>Methaxylenediamine<br>Dimer acid<br>(Empole 1010; produced by<br>Emery Co.,) | 40<br>28<br><br><br>5<br>27 |
| Polyether amide C | Caprolactam<br>Polyoxypropylenediamine<br>(Jeffermine D-2000; produced<br>by Jefferson Chemical Co.,)<br>Methaxylenediamine<br>Dimer acid<br>(Empole 1010; produced by<br>Emery Co.,) | 20<br>34<br><br><br>6<br>40 |
| Polyether amide D | Caprolactam<br>Polyoxypropylenediamine<br>(Jeffermine D-2000; produced<br>by Jefferson Chemical Co.,)<br>Methaxylenediamine<br>Dimer acid<br>(Empole 1010; produced by<br>Emery Co.,) | 95<br>2<br><br><br>1<br>2 |

Table 2

| | Polyether amide | | Oxygen perme- ability $(cm^3/m^2 \cdot day)$ | Pinhole-formation resistance | | Transpa- rency (Haze) (%) | Gellation ratio ($\eta_6/\eta$) |
| | Kind | Amount (parts by weight) | | Tensile modulus $(kg/cm^2)$ | Elongation (%) | | |
|---|---|---|---|---|---|---|---|
| Exam. 1 | Polyether amide A | 42.9 | 1.0 or less | 18,700 | 315 | 1.5 | 1.4 |
| Exam. 2 | " | 11.1 | 1.0 or less | 23,600 | 154 | 0.9 | 1.2 |
| Exam. 3 | " | 100 | 4.2 | 12,600 | 322 | 3.4 | 1.5 |
| Exam. 4 | Polyether amide B | 42.9 | 1.0 or less | 17,100 | 338 | 6.3 | 1.3 |
| Comp. 1 | – | 0 | 1.0 or less | 24,100 | 58 | 0.5 | 1.2 |
| Comp. 2 | Polyether amide A | 3.1 | 1.0 or less | 23,900 | 60 | 0.6 | 1.2 |
| Comp. 3 | " | 233 | 18.4 | 10,400 | 430 | 4.9 | 1.5 |
| Comp. 4 | Copolymer of Nylon 6/6,6 | 42.9 | 1.0 or less | 19,800 | 380 | 1.0 | 2.8 |
| Comp. 5 | Polyether amide C | 42.9 | 2.1 or less | 15,300 | 381 | 15.5 | 1.2 |
| Comp. 6 | Polyether amide D | 42.9 | 1.0 or less | 19,600 | 281 | 0.8 | 2.1 |

0 258 506

## Claims

1. A resin composition of a saponified product of an ethylenic copolymer comprising as polymer components 100 parts by weight of a saponified product of a copolymer of ethylene and vinyl acetate containing 5 to 50 % by weight of recurring units -$CH_2CH_2$-based on said ethylene monomer and having a saponification degree of about 80 % or more, and 5 to 150 parts by weight of a polyamide elastomer obtained by polycondensation of a caproamide, a polyether diamine and a dicarboxylic acid containing 30 to 90 % by weight of recurring units -$NH(CH_2)_5$-CO-based on the caproamide monomer.

2. The resin composition of a saponified product of an ethylenic copolymer according to Claim 1, wherein said saponified product of the copolymer of ethylene and vinyl acetate contains 10 to 45 % by weight of the recurring units -$CH_2CH_2$-.

3. The resin composition of a saponified product of an ethylenic copolymer according to Claim 1, wherein said saponification degree is 90 % or more.

4. The resin composition of a saponified product of an ethylenic copolymer according to Claim 1, wherein said saponified product of the ethylenic copolymer comprises 10 to 100 parts by weight of the polyamide elastomer.

5. The resin composition of a saponified product of an ethylenic copolymer according to Claim 1, wherein said polyamide elastomer contains 40 to 80 % by weight of the recurring units -$NH(CH_2)_5$-CO-based on the caproamide monomer.

6. The resin composition of a saponified product of an ethylenic copolymer according to Claim 1, wherein said polyamide elastomer has a relative viscosity of about 1.1 to 2.5 at 25 °C in a solution in which the polyamide elastomer is dissolved in methacresol in a concentration of 0.5 g/100 ml.

7. The resin composition of a saponified product of an ethylenic copolymer according to Claim 1, wherein said caproamides is caprolactam or 6-aminocapronic acid.

8. The resin composition of a saponified product of an ethylenic copolymer according to Claim 1, wherein said polyether diamine is a compound having plural recurring units -O-R-which is a straight-chain or branched oxyalkylene having three or more carbon atoms in a molecular chain and having amino groups at both ends of the molecular chain.

9. The resin composition of a saponified product of an ethylenic copolymer according to Claim 1, wherein said dicarboxylic acid is selected from the group consisting of oxalic acid, succinic acid, glutaric acid, adipic acid, pimelic acid, suberic acid, azelaic acid, dodecanedicarboxylic acid, 1,4-cyclohexanedicarboxylic acid, terephthalic acid, isophthalic acid and an aliphatic dicarboxylic acid obtained by subjecting a monobasic fatty acid having 8 to 24 carbon atoms to coupling reaction.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | EP-A-0 144 239 (AMERICAN CAN) <br> * Claims 1-16; page 4, line 7 - page 6, line 1; page 9, line 2 - page 10, line 7 * <br><br> --- | 1-9 | C 08 L 77/00 <br> C 08 L 29/04 <br> C 08 L 23/08 |
| A | EP-A-0 044 484 (BAYER) <br> * Claim 1 * <br><br> ----- | 1 | |

TECHNICAL FIELDS
SEARCHED (Int. Cl.4)

C 08 L

The present search report has been drawn up for all claims

| Place of search | Date of completion of the search | Examiner |
|---|---|---|
| THE HAGUE | 03-07-1987 | GOOVAERTS R.E. |